# EUROPÄISCHE PATENTSCHRIFT

(11) **EP 3 499 469 B1**
(45) Veröffentlichungstag und Bekanntmachung des Hinweises auf die Patenterteilung: **27.03.2024**
(21) Anmeldenummer: 18212061.8
(22) Anmeldetag: 12.12.2018
(51) Int. Cl.: G07C 5/00, G07C 5/08, G01P 1/12

(54) **VERFAHREN ZUM ERKENNEN EINER MANIPULATION AN EINER EIN AUFZEICHNUNGSGERÄT UND EINEN BEWEGUNGSSENSOR AUFWEISENDEN VORRICHTUNG**
METHOD FOR DETECTING TAMPERING WITH A RECORDING APPARATUS AND DEVICE WITH A MOTION SENSOR
PROCÉDÉ DE DÉTECTION D'UNE MANIPULATION SUR UN APPAREIL D'ENREGISTREMENT ET DISPOSITIF COMPORTANT UN DÉTECTEUR DE MOUVEMENT

(30) Priorität: 14.12.2017 DE 102017222806
(43) Veröffentlichungstag der Anmeldung: 19.06.2019
(73) Patentinhaber: Continental Automotive Technologies GmbH, 30165 Hannover (DE)
(72) Erfinder: Jacobi, Hartmut, 78078 Niedereschach (DE)
(74) Vertreter: Continental Corporation

(56) Entgegenhaltungen:
- EP-A1- 2 302 398
- EP-A2- 3 127 763
- DE-A1-102006 033 225
- DE-A1-102006 040 297

## Beschreibung

Die Erfindung bezieht sich auf ein Verfahren zum Erkennen einer Manipulation an einer ein Aufzeichnungsgerät und einen Bewegungssensor aufweisenden, in ein Kraftfahrzeug eingebauten Vorrichtung zum Aufzeichnen einer bewegungsabhängigen Größe des Kraftfahrzeugs, wobei der Bewegungssensor Bewegungssignale an das Aufzeichnungsgerät übermittelt. Außerdem bezieht sich die Erfindung auf eine Vorrichtung zum Aufzeichnen einer bewegungsabhängigen Größe eines Kraftfahrzeugs mit einem in das Kraftfahrzeug eingebauten Aufzeichnungsgerät und mit einem mit dem Aufzeichnungsgerät verbundenen, in das Kraftfahrzeug eingebauten Bewegungssensor.

Ein vorgenanntes Verfahren ist bekannt von einer Vorrichtung mit einem in ein Kraftfahrzeug eingebauten Aufzeichnungsgerät, das ein Fahrtschreiber ist, und mit einem in das Kraftfahrzeug eingebauten Bewegungssensor, der ein sogenannter Drehwertgeber und mit dem Fahrtschreiber verbunden ist. Der Drehwertgeber übermittelt aus einer Bewegung des Kraftfahrzeugs resultierende Bewegungssignale an den Fahrtschreiber. Von dem Fahrtschreiber wird eine auf den Bewegungssignalen beruhende bewegungsabhängige Größe des Kraftfahrzeugs aufgezeichnet.

Um eine betrügerische Veränderung der an den Fahrtschreiber übermittelten Bewegungssignale und somit eine Verfälschung der bewegungsabhängigen Größe erkennen zu können, ist es bekannt, zwischen Drehwertgeber und Fahrtschreiber über eine Signalleitung Signale unverschlüsselt und über eine Datenleitung Signale verschlüsselt zu übertragen. Damit ist es möglich, eine Vielzahl von denkbaren Manipulationen an der den Fahrtschreiber und den Drehwertgeber aufweisenden Vorrichtung zu erkennen.

Aus EP 2 302 398 A1 ist eine Sensoranordnung mit einem Sensor bekannt, der ein Wege- oder Drehzahlsensor sein kann. Die Sensoranordnung weist einen ersten Sensor zum Detektieren eines Parameters des Fahrzeugs auf. In der Sensoranordnung ist ein zweiter Sensor benachbart zu dem ersten Sensor angeordnet, der unabhängig von dem ersten Sensor ist und auf einem zum ersten Sensor unterschiedlichen Erfassungsprinzip arbeitet.

DE 10 2006 033 225 A1 offenbart ein Manipulationserfassungssystem für Fahrzeugbauteile. Das Manipulationserfassungssystem kann in Kombination mit einem Temperaturüberwachungssystem betrieben werden, welches die Temperatur eines Fahrzeugbauteils überwacht.

Aufgabe der Erfindung ist es, ein Verfahren der eingangs genannten Art anzugeben, welches die Möglichkeiten zum Erkennen einer Manipulation zusätzlich verbessert. Außerdem ist es Aufgabe der Erfindung, eine Vorrichtung zu schaffen, welche zusätzlich verbesserte Möglichkeiten zum Erkennen einer Manipulation bietet.

Die erstgenannte Aufgabe wird erfindungsgemäß mit einem Verfahren nach Anspruch 1 gelöst.

Von besonderem Vorteil ist bei der Erfindung, dass unabhängig von den Bewegungssignalen selbst eine Information über einen Einbauort des Bewegungssensors im Kraftfahrzeug gewonnen und für einen Vergleich mit einem zu erwartenden Wert genutzt wird. Dabei macht sich die Erfindung die Erkenntnis zu Nutze, dass während des Betriebs des Kraftfahrzeugs an unterschiedlichen Orten in dem Kraftfahrzeug unterschiedliche Temperaturen vorliegen. Zum Beispiel herrscht in einer Fahrerkabine, in der sich üblicherweise ein menschlicher Fahrer des Kraftfahrzeugs befindet, eine Temperatur von in etwa 20 °C, wohingegen in einem Fahrzeuggetriebe des Kraftfahrzeugs eine Temperatur von beispielsweise in etwa 90 °C oder sogar mehr herrscht.

Die Sensortemperatur des Bewegungssensors korrespondiert mit dem Einbauort des Bewegungssensors, so dass die Sensortemperatur eine zumindest implizite Information über den Einbauort des Bewegungssensors enthält. Somit hat ein ordnungsgemäßer Einbauort des Bewegungssensors eine zu erwartende Sensortemperatur. Mit dieser - bezüglich des ordnungsgemäßen Einbauortes des Bewegungssensors in dem Kraftfahrzeug - zu erwartenden Sensortemperatur wird die erfasste Sensortemperatur verglichen.

Liegt eine Abweichung zwischen der erfassten Sensortemperatur und der zu erwartenden Sensortemperatur vor, so ist das ein Indiz dafür, dass der ordnungsgemäße und somit zu erwartenden Einbauort des Bewegungssensors nicht mit dem tatsächlichen Einbauort, nämlich dem Ort, an dem die Sensortemperatur erfasst wurde, übereinstimmt. Ein nicht ordnungsgemäßer Einbauort des Bewegungssensors ist eine Manipulation an der das Aufzeichnungsgerät und den Bewegungssensor aufweisenden Vorrichtung.

Schon ein nicht ordnungsgemäßer Einbauort des Bewegungssensors allein ist ein Hinweis darauf, dass das an das Aufzeichnungsgerät übermittelte Bewegungssignal fehlerhaft ist; denn regelmäßig nur an dem ordnungsgemäßen Einbauort kann, beispielsweise durch Abgreifen einer Bewegung eines dem Bewegungssensor zugeordneten Getriebezahnrades eines Fahrzeuggetriebes, ein korrektes Bewegungssignal erzeugt werden. Darüber hinaus eröffnet ein nicht ordnungsgemäßer Einbauort des Bewegungssensors einem in manipulativer Absicht handelnden Nutzers grundsätzlich auch erweiterte und vereinfachte Möglichkeiten, die an das Aufzeichnungsgerät übermittelten Bewegungssignale zu manipulieren, und zwar sowohl bereits beim Erzeugen der Bewegungssignale als auch beim Übermitteln der Bewegungssignale.

Zusätzliche vorteilhafte Weiterbildungen der Erfindung sind in den Unteransprüchen angegeben.

Man könnte sich zum Beispiel vorstellen, dass die zu erwartende Sensortemperatur beispielsweise in einer Bedienungsanleitung angegeben und für das Vergleichen mit der erfassten Sensortemperatur in das Aufzeichnungsgerät eingegeben wird. Gemäß der Erfindung hingegen ist die zu erwartende Sensortemperatur als Referenzwert in dem Aufzeichnungsgerät und/oder in einem mit dem Aufzeichnungsgerät gekoppelten Kontrollgerät gespeichert. Dadurch wird die Zuverlässigkeit des erfindungsgemäßen Verfahrens zusätzlich erhöht und die Durchführbarkeit des Verfahrens weiter vereinfacht.

Einer vorteilhaften Weiterbildung der Erfindung gemäß wird bei einer Abweichung der erfassten Sensortemperatur von der zu erwartenden Sensortemperatur ein Fehlersignal erzeugt. Auf diese Weise kann eine weitere Vereinfachung des Verfahrens erzielt werden. Vorzugsweise wird das Fehlersignal gespeichert und/oder angezeigt. Das Anzeigen des Fehlersignals kann beispielsweise optisch und mittels eines Displays des Aufzeichnungsgeräts und/oder eines mit dem Aufzeichnungsgerät gekoppelten Kontrollgeräts erfolgen.

Für eine zusätzliche Erhöhung der Zuverlässigkeit des erfindungsgemäßen Verfahrens ist es von besonderem Vorteil, wenn gemäß einer anderen vorteilhaften Weiterbildung der Erfindung der Bewegungssensor die Sensortemperatur zyklisch erfasst. Das zyklische Erfassen der Sensortemperatur bedeutet, dass der Bewegungssensor die Sensortemperatur, zumindest während einer bestimmten Zeitspanne, regelmäßig, mit Zeitabständen zwischen einzelnen Erfassungen erfasst.

Gemäß der Erfindung erfasst der Bewegungssensor über eine bestimmte Zeitspanne eine ein Temperaturprofil über diese Zeitspanne ergebende Mehrzahl von Sensortemperaturen, und das erfasste Temperaturprofil wird mit einem zu erwartenden Temperaturprofil verglichen, und bei einer Abweichung des erfassten Temperaturprofils von dem zu erwartenden Temperaturprofil wird ein Fehlersignal erzeugt. Die Mehrzahl von erfassten Sensortemperaturen bildet somit das erfasste Temperaturprofil. Vorzugsweise ist das zu erwartende Temperaturprofil als Referenzwert in dem Aufzeichnungsgerät und/oder in einem mit dem Aufzeichnungsgerät gekoppelten Kontrollgerät gespeichert. Durch das Erfassen des Temperaturprofils und Vergleichen mit dem zu erwartenden Temperaturprofil kann mit dem erfindungsgemäßen Verfahren noch zuverlässiger eine Manipulation erkannt werden.

Beispielsweise für Dokumentationszwecke ist es von Vorteil, wenn einer anderen Weiterbildung der Erfindung entsprechend die erfasste Sensortemperatur vor dem Vergleichen mit der zu erwartenden Sensortemperatur gespeichert wird. Es ist denkbar, die erfasste Sensortemperatur zum Beispiel in dem Aufzeichnungsgerät zu speichern. Hingegen wird die erfasste Sensortemperatur vorzugsweise in dem Bewegungssensor gespeichert.

Gemäß der Erfindung ist der Bewegungssensor in einem Fahrzeuggetriebe des Kraftfahrzeugs, insbesondere in einem Getriebegehäuse des Fahrzeuggetriebes, angeordnet, so dass die erfasste Sensortemperatur mit einer Getriebetemperatur des Fahrzeuggetriebes korrespondiert. Damit eignet sich das erfindungsgemäße Verfahren nicht nur besonders zum Durchführen bei einer Vorrichtung, die einen in ein Fahrzeuggetriebe eingebauten Bewegungssensor aufweist, sondern das Verfahren ist aufgrund einer grundsätzlich erheblichen Abweichung einer Getriebetemperatur von zum Beispiel einer Umgebungstemperatur oder einer Kabinentemperatur des Kraftfahrzeugs auch besonders zuverlässig. Die erfasste Sensortemperatur korrespondiert dabei regelmäßig in der Weise mit der Getriebetemperatur des Fahrzeuggetriebes, dass sie der Getriebetemperatur entspricht oder dass zumindest ein Temperaturprofil von erfassten Sensortemperaturen einem in dem Fahrzeuggetriebe zu erwartenden Temperaturprofil entspricht.

Die oben zweitgenannte Aufgabe wird erfindungsgemäß mit einer Vorrichtung nach Anspruch 4 gelöst. Die erfindungsgemäße Vorrichtung eignet sich insbesondere zum Durchführen eines erfindungsgemäßen Verfahrens.

Der Bewegungssensor ist vorzugsweise dazu ausgebildet, die erfasste Sensortemperatur an das Aufzeichnungsgerät zu übermitteln. Das Kontrollgerät kann die erfasste Sensortemperatur zum Beispiel aus dem Aufzeichnungsgerät auslesen oder beispielsweise direkt von dem Bewegungssensor empfangen.

Zusätzliche vorteilhafte Weiterbildungen der Erfindung sind in den weiteren Unteransprüchen angegeben.

Eine vorteilhafte Weiterbildung der Erfindung sieht vor, dass das Aufzeichnungsgerät und/oder das Kontrollgerät dazu ausgebildet ist, ein Fehlersignal zu erzeugen, wenn der Vergleich der erfassten Sensortemperatur mit der zu erwartenden Sensortemperatur eine Abweichung ergibt. Eine solche Abweichung bedeutet eine Nicht-Übereinstimmung von erfasster Sensortemperatur und zu erwartender Sensortemperatur. Beispielsweise kann das Fehlersignal mittels einer optischen Anzeigeeinrichtung, zum Beispiel einem Display, des Aufzeichnungsgeräts und/oder des Kontrollgeräts angezeigt werden. Es ist zum Beispiel auch denkbar, dass das Fehlersignal in einem Datenspeicher des Aufzeichnungsgeräts und/oder des Bewegungssensors gespeichert wird.

Für eine besonders große Zuverlässigkeit beim Erkennen einer möglichen Manipulation ist es hingegen von Vorteil, dass gemäß der Erfindung der Bewegungssensor in einem Fahrzeuggetriebe des Kraftfahrzeugs angeordnet ist. Vorzugsweise ist der Bewegungssensor in einem Getriebegehäuse des Fahrzeuggetriebes angeordnet.

Gemäß einer anderen vorteilhaften Weiterbildung der Erfindung weist der Bewegungssensor einen Datenspeicher auf und ist dazu ausgebildet, die erfasste Sensortemperatur in dem Datenspeicher zu speichern. Damit kann die erfasste Sensortemperatur geschützt in dem Bewegungssensor verbleiben bis sie zum Beispiel auf Anforderung des Aufzeichnungsgeräts an dieses, vorzugsweise verschlüsselt, übermittelt wird.

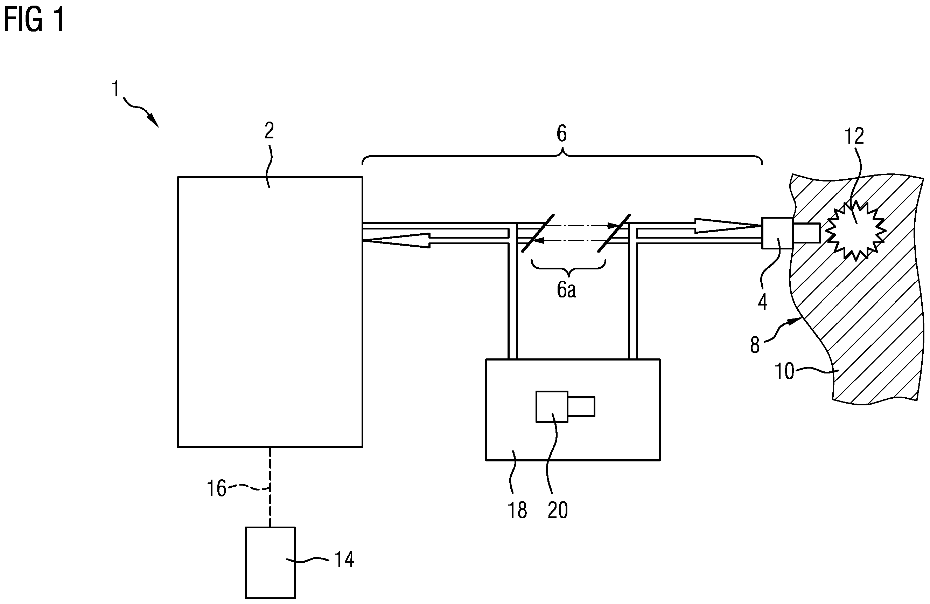

Ausführungsbeispiele der Erfindung werden im Folgenden anhand der beigefügten Zeichnung näher beschrieben. Es zeigt die
- einzige Figur 1: eine Vorrichtung zum Aufzeichnen einer bewegungsabhängigen Größe eines Kraftfahrzeugs.

In der einzigen Figur ist in skizzenhafter und schematisierter Darstellung eine Vorrichtung 1 zum Aufzeichnen einer bewegungsabhängigen Größe eines Kraftfahrzeugs gezeigt. Die Vorrichtung 1 weist ein in das - hier nicht weiter dargestellte - Kraftfahrzeug eingebautes Aufzeichnungsgerät 2 und einen in das Kraftfahrzeug eingebauten Bewegungssensor 4 auf. Der Bewegungssensor 4 ist mit dem Aufzeichnungsgerät 2 mittels einer Signalübertragungsverbindung 6 verbunden, wobei die Signalübertragungsverbindung 6 eine oder mehrere Verbindungsleitungen aufweisen kann, aber grundsätzlich auch eine drahtlose Verbindung sein kann.

Der Bewegungssensor 4 ist hier in einem Getriebegehäuse 8 eines Fahrzeuggetriebes 10 des Kraftfahrzeugs angeordnet. Der Bewegungssensor 4 unterliegt somit spezifischen Getriebetemperaturverläufen in dem Fahrzeuggetriebe 10.

In dem vorliegenden Ausführungsbeispiel ist der Bewegungssensor 4 in das Getriebegehäuse 8 eingeschraubt. Durch Abgreifen, also Erfassen, einer Bewegung eines dem Bewegungssensor 4 zugeordneten Getriebezahnrades 12 des Fahrzeuggetriebes 10 werden ein Bewegungssignale erzeugt. Die Bewegungssignale werden von dem Bewegungssensor 4 über die Signalübertragungsverbindung 6 an das Aufzeichnungsgerät 2 übermittelt.

Die Bewegungssignale können vor dem Übermitteln von dem Bewegungssensor 4 gegebenenfalls elektronisch bearbeitet und/oder aufbereitet werden. Bei den Bewegungssignalen, die an das Aufzeichnungsgerät 2 übermittelt werden, kann es sich sowohl um digitale als auch um analoge Signale handeln. Von dem Aufzeichnungsgerät 2 wird eine auf den übermittelten Bewegungssignalen beruhende bewegungsabhängige Größe der Kraftfahrzeugs, zum Beispiel eine Fahrgeschwindigkeit und/oder eine Fahrzeit des Kraftfahrzeugs, aufgezeichnet.

Der Bewegungssensor 4 ist nicht nur zum Erfassen der Bewegung des Getriebezahnrades 12 ausgebildet, sondern der Bewegungssensor 4 ist auch dazu ausgebildet, eine Sensortemperatur des Bewegungssensors 4 zu erfassen. Vorzugsweise erfasst der Bewegungssensor 4 die Sensortemperatur zyklisch. Die auf diese Weise erfassten Sensortemperaturen können zum Beispiel mittels eines Prozessors des Bewegungssensors 4 klassiert und in einem Datenspeicher des Bewegungssensors 4 gespeichert werden.

Die erfasste Sensortemperatur oder die erfassten und gegebenenfalls klassierten Sensortemperaturen wird beziehungsweise werden über die Signalübertragungsverbindung 6 an das Aufzeichnungsgerät 2 übermittelt. Die erfasste Sensortemperatur oder die erfassten Sensortemperaturen kann beziehungsweise können sowohl als analoges als auch als digitales Temperatursignal an das Aufzeichnungsgerät 2 übermittelt werden. Das Aufzeichnungsgerät 2 ist dazu ausgebildet, die von dem Bewegungssensor 4 erfasste Sensortemperatur oder die erfassten Sensortemperaturen mit einer zu erwartenden Sensortemperatur beziehungsweise beispielsweise einem Temperaturprofil zu vergleichen.

In einem anderen Ausführungsbeispiel ist ein Kontrollgerät 14, das zum Beispiel von Mitarbeitern von Kontrollbehörden verwendet werden kann, mittels einer Koppelverbindung 16 mit dem Aufzeichnungsgerät 2 gekoppelt, und das Kontrollgerät 14 ist dazu ausgebildet, die erfasste Sensortemperatur mit der zu erwartenden Sensortemperatur zu vergleichen. Die Koppelverbindung 16 kann sowohl eine drahtgebundene als auch eine drahtlose Verbindung sein. Die von dem Bewegungssensor 4 erfasste Sensortemperatur wird über die Signalübertragungsverbindung 6 und über die Koppelverbindung 16 an das Kontrollgerät 14 übertragen.

In einem weiteren Ausführungsbeispiel können das Aufzeichnungsgerät 2 und das Kontrollgerät 14 jeweils dazu ausgebildet sein, die erfasste Sensortemperatur mit der zu erwartenden Sensortemperatur zu vergleichen.

Eine Speicherung der erfassten Sensortemperatur beziehungsweise der erfassten (und gegebenenfalls klassierten) Sensortemperaturen, beispielsweise in dem Datenspeicher des Bewegungssensors 4, erfolgt vorzugsweise verschlüsselt. Ebenso erfolgt das Übermitteln der erfassten Sensortemperatur beziehungsweise der erfassten Sensortemperaturen an das Aufzeichnungsgerät 2 und gegebenenfalls das Kontrollgerät 14 vorzugsweise verschlüsselt. Gleiches gilt für das Übermitteln der Bewegungssignale an das Aufzeichnungsgerät 2.

Darüber hinaus ist in der Figur zudem eine Möglichkeit einer Manipulation an der das Aufzeichnungsgerät 2 und den Bewegungssensor 4 aufweisenden Vorrichtung 1 dargestellt. Bei der hier dargestellten Manipulation wird die Signalübertragungsverbindung 6 aufgetrennt, so dass die Signalübertragungsverbindung 6 eine Unterbrechung 6a aufweist. Die Unterbrechung 6a kann dauerhaft oder auch temporär, das heißt zum Beispiel mittels eines Schalters fallweise wieder schließbar, ausgebildet sein. Außerdem kann die Unterbrechung 6a zum Beispiel an einer nur schwer einsehbaren Stelle des Kraftfahrzeugs angeordnet sein, so dass sie beispielsweise für Mitarbeiter von Kontrollbehörden nicht ohne weiteres leicht erkennbar ist.

Die Unterbrechung 6a ist hier überbrückt mittels einer Manipulationseinrichtung 18. Die Manipulationseinrichtung 18 weist einen weiteren Sensor 20 auf. Mittels des weiteren Sensors 20 der Manipulationseinrichtung 18 wird ein gefälschtes Bewegungssignal generiert und an das Aufzeichnungsgerät 2 übermittelt. Das gefälschte Bewegungssignal korrespondiert - im Gegensatz zu dem von dem Bewegungssensor 4 generierten Bewegungssignal - nicht mit einer tatsächlichen Bewegung des Kraftfahrzeugs.

Das Aufzeichnungsgerät 2 erhält im Falle der geschilderten Manipulation das gefälschte Bewegungssignal von dem weiteren Sensor 20, wobei für das Aufzeichnungsgerät 2 jedoch nicht ohne weiteres erkennbar ist, dass dieses Bewegungssignal manipuliert ist. Das Aufzeichnungsgerät 2 und/oder das mit dem Aufzeichnungsgerät 2 gekoppelte Kontrollgerät 14 vergleicht eine von dem weiteren Sensor 20 erfasste Sensortemperatur des weiteren Sensors 20 mit einer zu erwartenden Sensortemperatur. Die zu erwartende Sensortemperatur bezieht sich auf die Sensortemperatur des Bewegungssensors 4 an dessen ordnungsgemäßem Einbauort, nämlich angeordnet in dem Getriebegehäuse 8. Die zu erwartende Sensortemperatur korrespondiert somit mit der Getriebetemperatur des Fahrzeuggetriebes 10.

Hingegen hängt die erfasste Sensortemperatur des weiteren Sensors 20 von dem Einbauort dieses Sensors 20 ab und korrespondiert beispielsweise mit der Umgebungstemperatur des Kraftfahrzeugs, wenn der Sensor 20 beispielsweise an einem Unterboden des Kraftfahrzeugs angeordnet ist, oder einer Kabinentemperatur des Kraftfahrzeugs, wenn der Sensor 20 zum Beispiel in einer Fahrerkabine des Kraftfahrzeugs angeordnet ist. Folglich weicht die erfasste Sensortemperatur des weiteren Sensors 20 von der zu erwartenden Sensortemperatur ab. Aufgrund der Abweichung wird zum Beispiel ein Fehlersignal in dem Aufzeichnungsgerät 2 und/oder dem Kontrollgerät 14 gespeichert und/oder angezeigt.

Sowohl die erfasste Sensortemperatur des weiteren Sensors 20 als auch die erfasste Sensortemperatur des Bewegungssensors 4 umfasst auch den jeweiligen Grenzfall, dass der Sensor 20 beziehungsweise der Bewegungssensor 4 keine Sensortemperatur erfasst und somit keine mit der zu erwartenden Sensortemperatur zu vergleichende erfasste Sensortemperatur vorliegt. Auch in einem solchen Grenzfall ergibt der Vergleich als Ergebnis eine Abweichung, die beispielsweise zum Erzeugen eines Fehlersignals führt.

## Patentansprüche

1. Verfahren zum Erkennen einer Manipulation an einer ein Aufzeichnungsgerät (2) und einen Bewegungssensor (4) aufweisenden, in ein Kraftfahrzeug eingebauten Vorrichtung (1) zum Aufzeichnen einer bewegungsabhängigen Größe des Kraftfahrzeugs, wobei der Bewegungssensor (4) Bewegungssignale an das Aufzeichnungsgerät (2) übermittelt, **dadurch gekennzeichnet, dass** der Bewegungssensor (4) eine Sensortemperatur des Bewegungssensors (4) erfasst und dass die erfasste Sensortemperatur mit einer bezüglich eines ordnungsgemäßen Einbauorts des Bewegungssensors (4) in dem Kraftfahrzeug zu erwartenden Sensortemperatur verglichen wird, wobei die zu erwartende Sensortemperatur als Referenzwert in dem Aufzeichnungsgerät (2) und/oder in einem mit dem Aufzeichnungsgerät (2) gekoppelten Kontrollgerät (14) gespeichert ist, und dass der Bewegungssensor (4) über eine bestimmte Zeitspanne eine ein Temperaturprofil über diese Zeitspanne ergebende Mehrzahl von Sensortemperaturen erfasst, dass das erfasste Temperaturprofil mit einem zu erwartenden Temperaturprofil verglichen wird und dass bei einer Abweichung des erfassten Temperaturprofils von dem zu erwartenden Temperaturprofil ein Fehlersignal erzeugt wird und dass der Bewegungssensor (4) in einem Fahrzeuggetriebe (10) des Kraftfahrzeugs angeordnet ist, so dass die erfasste Sensortemperatur mit einer Getriebetemperatur des Fahrzeuggetriebes (10) korrespondiert.

2. Verfahren nach Anspruch 1,
**dadurch gekennzeichnet, dass** der Bewegungssensor (4) die Sensortemperatur zyklisch erfasst.

3. Verfahren nach einem der vorhergehenden Ansprüche,
**dadurch gekennzeichnet, dass** die erfasste Sensortemperatur vor dem Vergleichen mit der zu erwartenden Sensortemperatur gespeichert wird.

4. Vorrichtung (1) zum Aufzeichnen einer bewegungsabhängigen Größe eines Kraftfahrzeugs, insbesondere Vorrichtung zum Durchführen eines Verfahrens nach einem der vorhergehenden Ansprüche, mit einem in das Kraftfahrzeug einbaubaren Aufzeichnungsgerät (2) und optional mit einem mit dem Aufzeichnungsgerät (2) gekoppelten Kontrollgerät (14), und mit einem mit dem Aufzeichnungsgerät (2) verbundenen, in das Kraftfahrzeug (2) einbaubaren Bewegungssensor (4), **dadurch gekennzeichnet, dass** der Bewegungssensor (4) dazu ausgebildet ist, eine Sensortemperatur des Bewegungssensors (4) zu erfassen und dass das Aufzeichnungsgerät (2) und/oder das mit dem Aufzeichnungsgerät (4) gekoppelte Kontrollgerät (14) dazu ausgebildet ist, die erfasste Sensortemperatur mit einer bezüglich eines ordnungsgemäßen Einbauorts des Bewegungssensors (4) in dem Kraftfahrzeug zu erwartenden Sensortemperatur zu vergleichen, wobei die zu erwartende Sensortemperatur als Referenzwert in dem Aufzeichnungsgerät (2) beziehungsweise in dem mit dem Aufzeichnungsgerät (2) gekoppelten Kontrollgerät (14) gespeichert ist, und dass der Bewegungssensor (4) über eine bestimmte Zeitspanne eine ein Temperaturprofil über diese Zeitspanne ergebende Mehrzahl von Sensortemperaturen erfasst, dass das Aufzeichnungsgerät (2) und/oder das mit dem Aufzeichnungsgerät (2) gekoppelte Kontrollgerät (14) dazu ausgebildet ist, das erfasste Temperaturprofil mit einem zu erwartenden Temperaturprofil zu vergleichen und dass bei einer Abweichung des erfassten Temperaturprofils von dem zu erwartenden Temperaturprofil ein Fehlersignal erzeugt wird und dass der Bewegungssensor (4) in einem Fahrzeuggetriebe (10) des Kraftfahrzeugs anordenbar ist, so dass die erfasste Sensortemperatur mit einer Getriebetemperatur des Fahrzeuggetriebes (10) korrespondiert.

5. Vorrichtung nach Anspruch 4,
**dadurch**
**gekennzeichnet, dass** der Bewegungssensor (4) einen Datenspeicher aufweist und dazu ausgebildet ist, die erfasste Sensortemperatur in dem Datenspeicher zu speichern.

## Claims

1. Method for detecting manipulation of an apparatus (1), which has a recording device (2) and a movement sensor (4) and is installed in a motor vehicle, for recording a movement-dependent variable of the motor vehicle, wherein the movement sensor (4) transmits movement signals to the recording device (2), **characterized in that** the movement sensor (4) captures a sensor temperature of the movement sensor (4), and **in that** the captured sensor temperature is compared with a sensor temperature to be expected in relation to a correct installation location of the movement sensor (4) in the motor vehicle, wherein the sensor temperature to be expected is stored as a reference value in the recording device (2) and/or in a monitoring device (14) coupled to the recording device (2), and **in that** the movement sensor (4) captures, over a particular time period, a plurality of sensor temperatures that produce a temperature profile over this time period, **in that** the captured temperature profile is compared with a temperature profile to be expected, and **in that** a fault signal is generated if the captured temperature profile deviates from the temperature profile to be expected, and **in that** the movement sensor (4) is arranged in a vehicle transmission (10) of the motor vehicle, and so the captured sensor temperature corresponds to a transmission temperature of the vehicle transmission (10).

2. Method according to Claim 1, **characterized in that** the movement sensor (4) cyclically captures the sensor temperature.

3. Method according to either of the preceding claims, **characterized in that** the captured sensor temperature is stored before the comparison with the sensor temperature to be expected.

4. Apparatus (1) for recording a movement-dependent variable of a motor vehicle, in particular apparatus for carrying out a method according to one of the preceding claims, comprising a recording device (2) able to be installed in the motor vehicle and optionally comprising a monitoring device (14) coupled to the recording device (2), and comprising a movement sensor (4) that is connected to the recording device (2) and is able to be installed in the motor vehicle (2), **characterized in that** the movement sensor (4) is designed to capture a sensor temperature of the movement sensor (4), and **in that** the recording device (2) and/or the monitoring device (14) coupled to the recording device (4) are/is designed to compare the captured sensor temperature with a sensor temperature to be expected in relation to a correct installation location of the movement sensor (4) in the motor vehicle, wherein the sensor temperature to be expected is stored as a reference value in the recording device (2) or in the monitoring device (14) coupled to the recording device (2), and **in that** the movement sensor (4) captures, over a particular time period, a plurality of sensor temperatures that produce a temperature profile over this time period, **in that** the recording device (2) and/or the monitoring device (14) coupled to the recording device (2) are/is designed to compare the captured temperature profile with a temperature profile to be expected, and **in that** a fault signal is generated if the captured temperature profile deviates from the temperature profile to be expected, and **in that** the movement sensor (4) is able to be arranged in a vehicle transmission (10) of the motor vehicle, and so the captured sensor temperature corresponds to a transmission temperature of the vehicle transmission (10).

5. Apparatus according to Claim 4, **characterized in that** the movement sensor (4) has a data memory and is designed to store the captured sensor temperature in the data memory.

## Revendications

1. Procédé de reconnaissance d'une manipulation sur un dispositif (1) possédant un appareil d'enregistrement (2) et un capteur de mouvement (4), installé dans un véhicule automobile pour enregistrer une grandeur dépendante du mouvement du véhicule automobile, le capteur de mouvement (4) transmettant des signaux de mouvement à l'appareil d'enregistrement (2), **caractérisé en ce que** le capteur de mouvement (4) détecte une température de capteur du capteur de mouvement (4) et **en ce que** la température de capteur détectée est comparée à une température de capteur à attendre en référence à un emplacement de montage correct du capteur de mouvement (4) dans le véhicule automobile, la température de capteur à attendre étant mémorisée en tant que valeur de référence dans l'appareil d'enregistrement (2) et/ou dans un appareil de contrôle (14) couplé à l'appareil d'enregistrement (2), et **en ce que** le capteur de mouvement (4) détecte, pendant un laps de temps déterminé, une pluralité de températures de capteur qui produisent un profil de température pendant ce laps de temps, **en ce que** le profil de température détecté est comparé à un profil de température à attendre et **en ce qu'**en cas d'écart entre le profil de température détecté et le profil de température à attendre, un signal d'erreur est généré et **en ce que** le capteur de mouvement (4) est disposé dans une boîte de vitesses de véhicule (10) du véhicule automobile, de sorte que la température de capteur détectée correspond à une température de boîte de vitesses de la boîte de vitesses de véhicule (10).

2. Procédé selon la revendication 1, **caractérisé en ce que** le capteur de mouvement (4) détecte la température de capteur de manière cyclique.

3. Procédé selon l'une des revendications précédentes, **caractérisé en ce que** la température de capteur détectée est mémorisée avant d'être comparée à la température de capteur à attendre.

4. Dispositif (1) d'enregistrement d'une grandeur dépendante du mouvement d'un véhicule automobile, en particulier dispositif destiné à mettre en oeuvre un procédé selon l'une des revendications précédentes, comprenant un appareil d'enregistrement (2) pouvant être installé dans le véhicule automobile et, en option, comprenant un appareil de contrôle (14) couplé à l'appareil d'enregistrement (2), et comprenant un capteur de mouvement (4) relié à l'appareil d'enregistrement (2) et pouvant être installé dans le véhicule automobile (2), **caractérisé en ce que** le capteur de mouvement (4) est configuré pour détecter une température de capteur du capteur de mouvement (4) et **en ce que** l'appareil d'enregistrement (2) et/ou l'appareil de contrôle (14) couplé à l'appareil d'enregistrement (4) est configuré pour comparer la température de capteur détectée à une température de capteur à attendre en référence à un emplacement de montage correct du capteur de mouvement (4) dans le véhicule automobile, la température de capteur à attendre étant mémorisée en tant que valeur de référence dans l'appareil d'enregistrement (2) ou dans l'appareil de contrôle (14) couplé à l'appareil d'enregistrement (2), et **en ce que** le capteur de mouvement (4) détecte, pendant un laps de temps déterminé, une pluralité de températures de capteur qui produisent un profil de température pendant ce laps de temps, **en ce que** l'appareil d'enregistrement (2) et/ou l'appareil de contrôle (14) couplé à l'appareil d'enregistrement (2) est configuré pour comparer le profil de température détecté à un profil de température à attendre et **en ce qu'**en cas d'écart entre le profil de température détecté et le profil de température à attendre, un signal d'erreur est généré et **en ce que** le capteur de mouvement (4) peut être disposé dans une boîte de vitesses de véhicule (10) du véhicule automobile, de sorte que la température de capteur détectée correspond à une température de boîte de vitesses de la boîte de vitesses de véhicule (10).

5. Dispositif selon la revendication 4, **caractérisé en ce que** le capteur de mouvement (4) possède une mémoire de données et est configuré pour mémoriser la température de capteur détectée dans la mémoire de données.
